# EUROPÄISCHE PATENTSCHRIFT

(11) **EP 1 849 634 B1**
(45) Veröffentlichungstag und Bekanntmachung des Hinweises auf die Patenterteilung: **10.12.2008**
(21) Anmeldenummer: 07008153.4
(22) Anmeldetag: 21.04.2007
(51) Int. Cl.: B60J 1/00

(54) **Vorrichtung und Verfahren zur Montage eines Fahrzeugfensters**
Device and method for installing a vehicle window
Dispositif et procédé de montage d'une fenêtre de véhicule

(30) Priorität: 27.04.2006 DE 102006019519
(43) Veröffentlichungstag der Anmeldung: 31.10.2007
(73) Patentinhaber: ProGlass GmbH, 73235 Weilheim/Teck (DE)
(72) Erfinder: Siegler, Oliver, 73235 Weilheim/Teck (DE)
(74) Vertreter: Ruckh, Rainer Gerhard

(56) Entgegenhaltungen:
- GB-A- 2 273 517
- US-A- 3 620 524
- US-A1- 2004 003 488

## Beschreibung

Die Erfindung betrifft eine Vorrichtung und ein Verfahren zur Montage eines Fahrzeugfensters.

Bei auftretenden Defekten von in Kraftfahrzeugen integrierten Fahrzeugfenstern; insbesondere Windschutzscheiben, infolge von Unfällen, Unwettern und dergleichen muss das defekte Fahrzeugfenster als Einheit durch ein neues Fahrzeugfenster ersetzt werden. Bei derartigen Montagearbeiten ist ein sehr exaktes und sorgfältiges Arbeiten des Bedienpersonals erforderlich, da das Fahrzeugfenster positionsgenau in den hierfür vorgesehenen Fensterausschnitt im Kraftfahrzeug eingesetzt werden muss. Da vor Einbringen des Fahrzeugfensters in den Fensterausschnitt Klebstoff zur Fixierung des Fahrzeugfensters eingebracht wird, muss das Fahrzeugfenster sofort in der richtigen Position des Fensterausschnitts eingesetzt werden.

Da zudem die Abmessungen und das Gewicht eines Fahrzeugfensters, insbesondere einer Windschutzscheibe, sehr groß sind, muss das Fahrzeugfenster von zwei Bedienpersonen in den Fensterausschnitt eingesetzt werden. Aufgrund der Komplexität des Montagevorgangs muss dieser typischerweise von zwei qualifizierten Bedienpersonen durchgeführt werden. Dies erfordert daher einen unerwünscht hohen Montageaufwand. Insbesondere in kleineren Montagebetrieben steht das hierfür erforderliche qualifizierte Personal nicht zur Verfügung.

Um diesem Nachteil zu begegnen, ist bereits versucht worden, Montagevorrichtungen für Fahrzeugfenster zu konzipieren, die allein von einer Bedienperson betätigt werden können.

Eine derartige Montagevorrichtung ist aus der US 3,620,524 bekannt. Diese Vorrichtung umfasst ein aus Profilen bestehendes Rahmengestell, welches auf der Motorhaube eines Kraftfahrzeugs mit Saugern fixiert wird. Auf diesem Rahmengestell ist ein Aufsatz fahrbar gelagert. Der Aufsatz umfasst zudem einen Schwenkmechanismus, mittels dessen das am Aufsatz gelagerte Fahrzeugfenster geschwenkt werden kann.

Durch die Kombination der Fahr- und Schwenkbewegung des Aufsatzes kann das Fahrzeugfenster in den Fensterausschnitt eingeführt werden, wobei dieser Montagevorgang von einer Person durchgeführt werden kann.

Nachteilig hierbei ist jedoch, dass die Montageposition des Fahrzeugfensters aufgrund nicht zu vermeidender Toleranzen bei der Zustellbewegung, insbesondere der Verfahrensbewegung des Aufsatzes, nicht exakt vorgebbar ist. Eine nachträgliche Feinjustage der Position der Fahrzeugfenster in dem Fensterausschnitt ist jedoch mit dieser Vorrichtung nicht möglich.

Weiterhin ist diese Montagevorrichtung bei modernen Kraftfahrzeugen, insbesondere Personenkraftwagen, nicht oder nur mit großen Einschränkungen einsetzbar, da dort der Rand der Motorhaube einen Überstand bildet, der über den unteren Teil des Fensterausschnitts mit dem Fahrzeugfenster übersteht. Da mit der Montagevorrichtung lediglich eine Anfahrbewegung des Aufsatzes an den Fensterausschnitt und nachfolgend eine Schwenkbewegung des Aufsatzes mit den daran gelagerten Fahrzeugfenstern durchführbar ist, ist mit dieser Vorrichtung ein Einführen von Fahrzeugfenstern in Fensterausschnitte, welche teilweise von der Motorhaube verdeckt sind, nicht möglich.

Der Erfindung liegt die Aufgabe zugrunde, ein Verfahren und eine Vorrichtung für eine einfache und präzise Montage von Fahrzeugfenstern im Kraftfahrzeug bereitzustellen.

Zur Lösung dieser Aufgabe sind die Merkmale der Ansprüche 1 und 9 vorgesehen. Vorteilhafte Ausführungsformen und zweckmäßige Weiterbildungen der Erfindung sind in den Unteransprüchen beschrieben.

Die erfindungsgemäße Vorrichtung dient zur Montage eines Fahrzeugfensters in einem Fensterausschnitt eines Kraftfahrzeugs. Die Vorrichtung umfasst einen Trägerrahmen und Sauger, welche zur Fixierung des Trägerrahmens am Kraftfahrzeug auf Segmente der Karosserie beidseits der Fensterausschnitte aufsetzbar sind. Ebenfalls ist an dem Trägerrahmen ein Montagerahmen mit weiteren Saugern vorgesehen, welche zur Fixierung des Fahrzeugfensters positionsverstellbar angeordnet sind. Dabei ist der den Montagerahmen tragende Trägerrahmen, bezüglich eines die Sauger aufweisenden Teils, das an einem an einen Rand des Fensterausschnitts anschließenden Segment der Karosserie fixierbar ist, schwenkbar.

Mit der erfindungsgemäßen Vorrichtung können unterschiedliche Fahrzeugfenster wie Heck- oder Seitenfenster und insbesondere Frontscheiben in Kraftfahrzeugen unterschiedlicher Bauart montiert werden. Zum Einsatz für unterschiedliche Kraftfahrzeuge ist der Trägerrahmen der Vorrichtung bevorzugt längenverstellbar ausgebildet.

Besonders vorteilhaft hierbei ist, dass die Montage mittels der erfindungsgemäßen Vorrichtung allein von einer Bedienperson durchgeführt werden kann.

Die Vorrichtung bildet damit eine einfach zu handhabende Einheit mittels derer defekte Fahrzeugfenster in Kraftfahrzeuge durch neue Fahrzeugfenster ersetzt werden können.

Der am Trägerrahmen positionsverstellbare Montagerahmen gewährleistet eine exakte Positionierung des Fahrzeugfensters im Fensterausschnitt, wobei die so ausgebildete Vorrichtung gleichzeitig einen einfachen und robusten Aufbau aufweist.

In einer besonders vorteilhaften Ausführungsform der Erfindung sind dem Trägerrahmen zu dessen Fixierung am Kraftfahrzeug ein Basisrahmen mit ersten Saugern und Fußteile mit Gabeln mit zweiten Saugern zugeordnet. Dabei werden die Fußteile mit den zweiten Saugern auf das Dach des Kraftfahrzeugs aufgesetzt und der Basisrahmen mit den ersten Saugern auf die Motorhaube des Kraftfahrzeugs aufgesetzt, so dass diese Komponenten beidseits des auszuwechselnden Fahrzeugfensters liegen. Der Trägerrahmen ist gelenkig an den Basisrahmen gekoppelt und kann so bezüglich dieses Rahmens geschwenkt werden, um ein Fahrzeugfenster aus dem Fensterausschnitt des Kraftfahrzeugs zu entfernen oder diesem zuzuführen.

In einer Montageposition ist ein Segment des Trägerrahmens in die Gabeln an den Fußteilen eingelegt und lagefixiert. Das Einführen in die Gabeln kann einfach und schnell durchgeführt werden. Besonders vorteilhaft weist der Trägerrahmen ein Rahmensegment auf, das gelenkig an die den Montagerahmen tragenden Trägerprofile des Trägerrahmens gekoppelt ist. Die Neigung des Rahmensegments zu den Trägerprofilen ist einstellbar und dadurch auch die Lage des Rahmensegments relativ zu den stationär angeordneten Gabeln, so dass das Rahmensegment bei Einschwenken des Trägerrahmens in die Montageposition sicher in den Gabeln gelagert werden kann.

Der Basisrahmen ist bevorzugt dreieckig ausgebildet, wobei an jeder Ecke des Basisrahmens ein Sauger gelagert ist. Die drei Sauger bilden damit eine Dreipunktauflage des Basisrahmens, die einen sicheren Halt auf der Motorhaube auch bei großen Gewichtsbelastungen während der Schwenkbewegung des gelenkig angekoppelten Trägerrahmens gewährleisten.

Besonders vorteilhaft ist der Basisrahmen lösbar mit dem Trägerrahmen verbunden. Dadurch kann der Basisrahmen allein, das heißt ohne Trägerrahmen auf der Motorhaube aufgesetzt werden, was aufgrund des geringen Gewichts des Basisrahmens leicht bewerkstelligt werden kann. Der Trägerrahmen kann dann einfach und schnell an dem auf der Motorhaube fixierten Basisrahmen befestigt werden.

In einer vorteilhaften Ausführungsform ist der Trägerrahmen am Basisrahmen verschiebbar gelagert, so dass bei auf der Motorhaube aufgesetztem Basisrahmen der Trägerrahmen quer zur Längsrichtung des Kraftfahrzeugs ausgerichtet werden kann.

Zusammen mit den Einstellmöglichkeiten des Montagerahmens relativ zum Trägerrahmen, die bevorzugt eine Verstellung des Montagerahmens in Längsrichtung des Trägerrahmens, eine Höhenverstellung des Montagerahmens und vorteilhaft zudem eine Schwenkbewegung des Montagerahmens umfassen, kann der Montagerahmen in allen drei Raumrichtungen relativ zum Fahrzeugfenster ausgerichtet werden.

Gemäß dem erfindungsgemäßen Verfahren erfolgt die Montage eines Fahrzeugfensters in folgenden Verfahrensschritten:
Fixieren eines Trägerrahmens an der Karosserie des Kraftfahrzeugs in einer Montageposition, in welcher der Trägerrahmen mittels Saugern, die auf beidseits des Fensterausschnitts liegende Segmente der Karosserie des Fahrzeugs aufgesetzt werden, fixiert wird,
fixieren des Fahrzeugfensters an Saugern eines Montagerahmens in vorgegebener Sollposition durch Positionsverstellung des Montagerahmens relativ zum Trägerrahmen,
durchführen einer Schwenkbewegung des den Montagerahmen tragenden Trägerrahmens bezüglich eines, an einem an einen Rand des Fensterausschnitts angrenzenden Segment der Karosserie mit Saugern befestigten Teils zur Einbringung des Fahrzeugfensters in eine vom Fensterausschnitt entfernte Arbeitsposition,
aufbringen von Klebstoff auf das Fahrzeugfenster oder den Fensterausschnitt,
durchführen einer Schwenkbewegung des Trägerrahmens in die Montageposition,
einsetzen des Fahrzeugfensters in den Fensterausschnitt durch Positionsverstellung des Montagerahmens relativ zum Trägerrahmen.

Zur Definition der Sollposition kann gemäß einer ersten Variante das einzubauende Fahrzeugfenster zunächst lose, d. h. ohne Klebstoff in die Aufnahme gelegt werden, wonach dann die Sauger des Montagerahmens in den Sollpositionen am Fahrzeugfenster fixiert werden.

Durch Schwenken des Montagerahmens wird das Fahrzeugfenster abgehoben und in eine Arbeitsposition gebracht, wobei das Fahrzeugfenster in dieser Arbeitsposition vorteilhaft so angeordnet ist, dass der Klebstoff auf den Rand des Fahrzeugfensters aufgebracht werden kann. Alternativ oder zusätzlich kann der Klebstoff am Fensterausschnitt angebracht werden.

Da das Fahrzeugfenster in den Sollpositionen am Montagerahmen gehalten ist, kann durch die umgekehrte Bewegung des Trägerrahmens und des Montagerahmens, d. h. ein Schwenken des den Montagerahmen tragenden Teils des Trägerrahmens und eine anschließende Positionsverstellung des Montagerahmens das Fahrzeugfenster exakt und positionsgenau in den Fensterausschnitt platziert und fixiert werden.

Durch die Zwangsführung des Montagerahmens am Trägerrahmen ist dabei eine reproduzierbare und genaue Zustellbewegung des Montagerahmens mit dem Fahrzeugfenster an dem Fensterausschnitt gewährleistet.

Da der Montagerahmen in mehreren Raumrichtungen am Trägerrahmen positionsverstellbar ist, kann eine exakte Zuführung des Fahrzeugfensters zum Fensterausschnitt auch bei komplexen Geometrien des Kraftfahrzeugs, insbesondere bei über den Rand des Fensterausschnitts ragenden Motorhauben, gewährleistet werden. Weiterhin ist durch den positionsverstellbaren Montagerahmen auch eine Feinjustage des Fahrzeugfensters bei Aufsetzen auf den Fensterausschnitt möglich.

Zur Definition der Sollposition kann gemäß einer zweiten Variante des erfindungsgemäßen Verfahrens der Trägerrahmen auf das Kraftfahrzeug aufgesetzt werden, wenn noch das alte, zu entfernende Fahrzeugfenster im Fensterausschnitt liegt. In einem ersten Schritt wird der Montagerahmen an dieses Fahrzeugfenster herangeführt, um die Sauger des Montagerahmens in den Sollpositionen am Fahrzeugfenster zu fixieren. Diese Sollpositionen werden mit einem Stift oder dergleichen am Fahrzeugfenster markiert. Dann erfolgt das Schwenken des Fahrzeugfensters am Montagerahmen in die Arbeitsposition. In dieser Arbeitsposition wird das alte Fahrzeugfenster vom Montagerahmen abgenommen und auf das neue Fahrzeugfenster gelegt, um auf diesem die Markierungen der Sollpositionen zu übernehmen. Dann wird das neue Fahrzeugfenster an den markierten Sollpositionen an den Saugern des Montagerahmens fixiert. Nach Aufbringen des Klebstoffs kann dann wiederum die Zuführung des am Montagerahmen gelagerten neuen Fahrzeugfensters an den Fensterausschnitt erfolgen.

Um das Markieren der Sollpositionen mittels eines Stifts auf dem Fahrzeugfenster zu vermeiden, können besonders vorteilhaft auch Peilstäbe zur Markierung der Sollpositionen eingesetzt werden.

Die Erfindung wird im Nachfolgenden anhand der Zeichnungen erläutert. Es zeigen
- Figur 1:: Draufsicht auf eine an einem Kraftfahrzeug angebrachte Vorrichtung zur Montage eines Fahrzeugfensters
- Figur 2:: Seitenansicht der Vorrichtung gemäß Figur 1

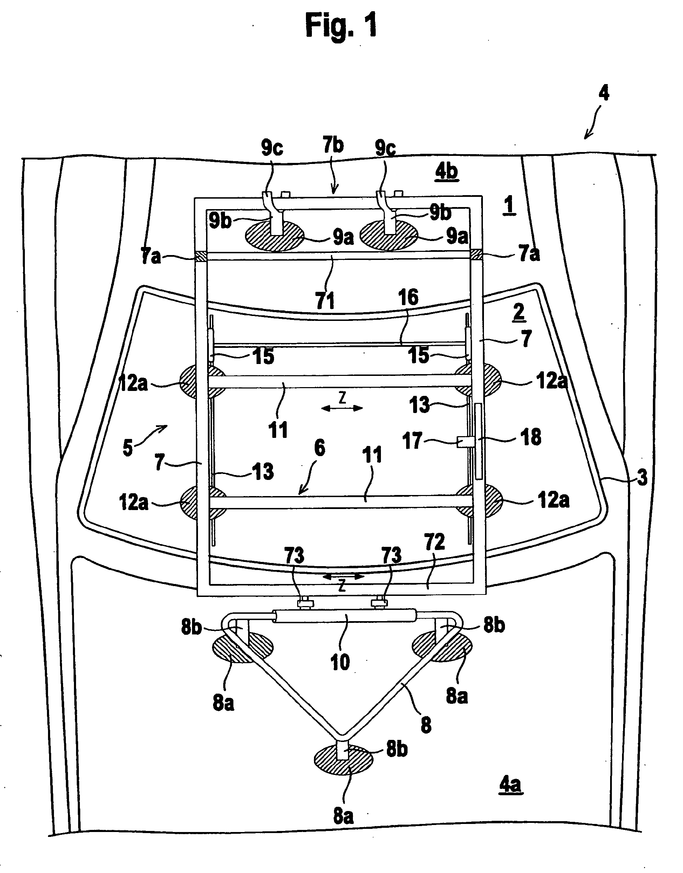

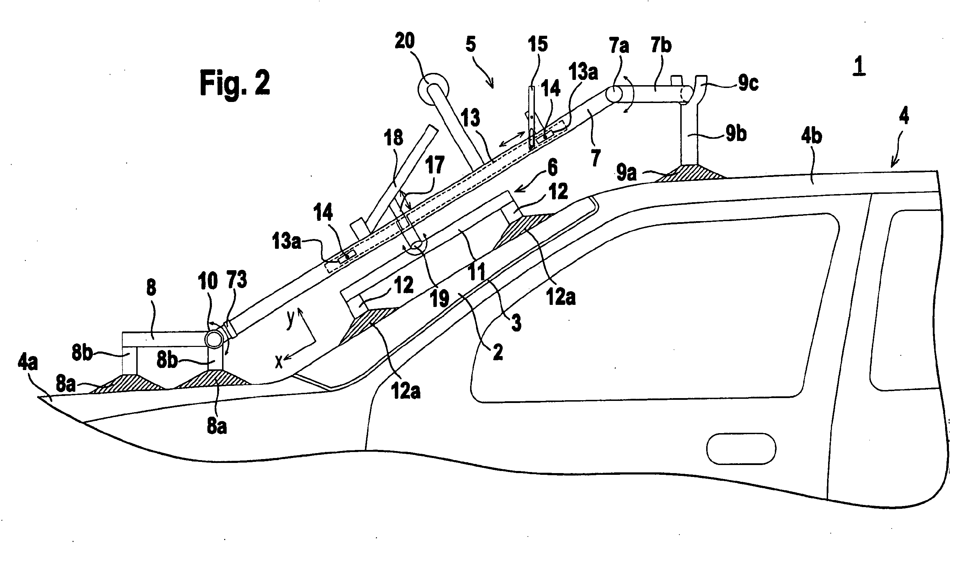

Die Figuren 1 und 2 zeigen eine Vorrichtung 1 zur Montage eines Fahrzeugfensters 2 in einem Fensterausschnitt 3 eines Kraftfahrzeugs 4. Die Vorrichtung 1 bildet eine von einer Bedienperson handhabbare Montagehilfe, die dazu verwendet wird, um defekte Fahrzeugfenster 2 in Kraftfahrzeugen 4 durch neue Fahrzeugfenster 2 auszutauschen. Im vorliegenden Fall wird mit der Vorrichtung 1 nach Entfernen eines defekten Fahrzeugfensters 2 ein neues Fahrzeugfenster 2, welches von der Windschutzscheibe eines als Pkw ausgebildeten Kraftfahrzeugs 4 gebildet ist, in den Fensterausschnitt 3 eingesetzt.

Die Vorrichtung 1 umfasst einen Trägerrahmen 5, der an der Karosserie des Kraftfahrzeugs 4 fixiert werden kann, sowie einen am Trägerrahmen 5 gelagerten Montagerahmen 6, der zur Aufnahme des Fahrzeugfensters 2 dient. Die Figuren 1 und 2 zeigen den Trägerrahmen 5 in seiner Montageposition am Kraftfahrzeug 4. Wie insbesondere aus Figur 1 ersichtlich, weist der Trägerrahmen 5 zwei in Abstand zueinander parallel verlaufende Trägerprofile 7 auf. Die Trägerprofile 7 sind an ihren oberen und unteren längsseitigen Enden jeweils über ein Querprofil 71, 72 verbunden. Die Trägerprofile 7 bilden mit den Querprofilen 71, 72 einen rechteckigen Rahmen. An den oberen enden der Trägerprofile ist jeweils ein Gelenk 7a vorgesehen. Die Gelenke 7a bilden eine Gelenkverbindung mittels derer ein Rahmensegment 7b an die Trägerprofile anschließt, so dass das Rahmensegment 7b eine Verlängerung des Rahmens bildet. Die Gelenke weisen Rastungen auf, so dass das Rahmensegment in unterschiedlichen Winkelstellungen zum Rahmen fixierbar ist. Zur Fixierung des vom Rahmen mit den Trägerprofilen und dem anschließenden Rahmensegment 7b gebildeten Trägerrahmens 5 am Kraftfahrzeug sind Sauger 8a, 9a vorgesehen. Die identisch ausgebildeten Sauger 8a, 9a sind als Vakuumsauger ausgebildet, die in bekannter Weise tellerförmig ausgebildet sind und aus einem elastischen, vorzugsweise gummiartigen Material bestehen. Der Trägerrahmen 5 und dessen Trägerprofile 7 erstrecken sich in der in den Figuren 1 und 2 dargestellten Montageposition über den Fensterausschnitt 3 hinweg. Zur Anpassung der Vorrichtung 1 an unterschiedliche Kraftfahrzeug-Typen können die Trägerprofile 7 längenverstellbar sein. Beispielsweise können die Trägerprofile 7 hierzu in Form von Teleskopstangen ausgebildet sein.

Drei erste Sauger 8a sind an einem dreieckigen Basisrahmen 8 gelagert. Dabei steht von jeder Ecke des Basisrahmens 8 ein Fußteil 8b nach unten hervor, an dessen unterem Ende ein Sauger 8a angeordnet ist. Der Basisrahmen 8 wird so auf die Motorhaube 4a des Kraftfahrzeugs 4 aufgesetzt, dass ein Profil des Basisrahmens 8 quer zur Längsrichtung des Kraftfahrzeugs 4, das heißt in z-Richtung verläuft. Dieses Profil ist von einem Rohr 10 umschlossen. Das Profil ist mit geringem Spiel im Rohr 10 geführt, das heißt das Rohr 10 kann in z-Richtung am Profil verschoben werden. Das Rohr 10 selbst ist über Verbindungselemente 73 lösbar mit dem Querprofil 72 des Basisrahmens 8 verbunden, so dass der Basisrahmen 8 lösbar mit dem Trägerrahmen 5 verbunden ist. Die Verbindungselemente 73 können jeweils von zwei ineinander einrastbaren Rohrsegmenten gebildet sein. Am Rohr 10 können Klemmelemente oder dergleichen vorgesehen sein, mittels derer das Rohr 10 in einer Sollposition am Profil des Basisrahmens 8 lagefixiert wird.

Zur Lagefixierung des oberen Teils des Trägerrahmens 5 sind zwei zweite Sauger 9a vorgesehen, die an jeweils an der Unterseite eines weiteren Fußteils 9b angeordnet sind. An den Oberseiten dieser Fußteile 9b befindet sich jeweils eine Gabel 9c. Die Sauger 9a sind auf das Dach 4a des Kraftfahrzeugs 4 so aufgesetzt, dass diese längs einer in z-Richtung verlaufenden Geraden orientiert sind. In der Montageposition des Trägerrahmens 5 liegt das in z-Richtung verlaufende Profil des Rahmensegments 7b in den Gabeln 9c der Fußteile 9b, die mit den Saugern 9a am Dach 4b befestigt sind. Dadurch ist der Trägerrahmen 5 lagefixiert.

Der Trägerrahmen 5 mit seinen zugeordneten Komponenten, nämlich dem Basisrahmen 8 mit den Saugern 8a sowie den die Gabeln 9c aufweisenden Fußteilen 9b mit den Saugern 9a weist einen modularen Aufbau auf, der eine Variantenbildung der Vorrichtung erleichtert und zudem eine einfache und präzise Montage des Trägerrahmens 5 am Kraftfahrzeug 4 ermöglicht. Da der Basisrahmen 8 lösbar mit dem Trägerrahmen 5 verbunden ist, kann der Basisrahmen zunächst ohne den Trägerrahmen 5 auf der Motorhaube 4a fixiert werden. Da der Basisrahmen 8 allein ein geringes Gewicht aufweist, kann diese Montage einfach und schnell erfolgen. Ebenso einfach können die Fußteile 9b mit den Saugern 9a auf dem Dach 4b des Kraftfahrzeugs 4 fixiert werden. Danach wird der Trägerrahmen 5 durch Schließen der Verbindungselemente 73 am Basisrahmen 8 fixiert. Der Trägerrahmen 5 wird dann in Richtung der Fußteile 9b geschwenkt. Die Neigung des Rahmensegments 7b zu den Trägerprofilen 7 wird dann so eingestellt, dass das Rahmensegment 7b bei Einschwenken des Trägerrahmens 5 in den Gabeln 9c an den Oberseiten der Fußteile 8b lagefixiert ist.

Durch die Verschiebbarkeit des Rohrs 10 am Profil des Trägerrahmens 5 kann der Trägerrahmen 5 mit dem Montagerahmen 6 in z-Richtung, das heißt quer zur Fahrzeuglängsrichtung, verschoben werden, wodurch eine Ausrichtung der Vorrichtung 1 auf das Fahrzeugfenster 2 möglich ist.

An dem Trägerrahmen 5 ist der Montagerahmen 6 positionsverstellbar gelagert. Der Montagerahmen 6 umfasst ein rechteckiges Rahmenprofil 11, an dessen Unterseite an Streben 12 gelagerte weitere Sauger 12a vorgesehen sind, welche wiederum als Vakuumsauger ausgebildet sind und welche zur Aufnahme des Fahrzeugfensters 2 dienen. Der Montagerahmen 6 ist bezüglich des Trägerrahmens 5 in den in Figur 2 mit x und y bezeichneten Raumrichtungen verstellbar.

Zur Verstellung des Montagerahmens 6 in x-Richtung, das heißt in Längsrichtung der Trägerprofile 7, ist dieser über Schienen 13 an den Trägerprofilen 7 verschiebbar gelagert. Jeweils eine Schiene 13 verläuft parallel zu einem Trägerprofil 7. Die Schienen 13 weisen Langlöcher 13a auf, in welchen Stifte 14 oder dergleichen, die mit dem jeweils zugeordneten Trägerprofil 7 verbunden sind, geführt sind.

Zur Verschiebung der Schienen 13 und damit des Montagerahmens 6 sind Hebel 15 vorgesehen. Jeweils ein Hebel 15 ist an einer Schiene 13 angeordnet. Die Schienen 13 sind über einen Rundstab 16 gekoppelt. Durch diese Kopplung wird erreicht, dass bei Betätigung nur eines Hebels 15 beide Schienen 13 und damit der gesamte Montagerahmen 6 relativ zu den Trägerprofilen 7 in x-Richtung verschoben werden.

Zur Höhenverstellung des Montagerahmens 6 in y-Richtung ist das Rahmenprofil 11 an einem Führungselement 17 gelagert, welches mit einem weiteren Hebel 18 betätigbar ist. Durch Betätigen des Hebels 18 wird das Rahmenprofil 11 am Trägerrahmen 5 angehoben oder abgesenkt. Am unteren Ende des Führungselements 17 befindet sich eine Gelenkverbindung 19 zur Ankopplung des Rahmenprofils 11, so dass dieses zusätzlich um eine in z-Richtung verlaufende Schwenkachse geschwenkt werden kann.

Schließlich weist der Trägerrahmen 5 einen die Trägerprofile 7 verbindenden und oberhalb dieser verlaufenden Bügel 20 auf.

Der Montagevorgang mit der Vorrichtung 1 gemäß den Figuren 1 und 2 umfasst folgende Arbeitsschritte:

Zunächst wird das defekte, auszutauschende Fahrzeugfenster 2 aus dem Kraftfahrzeug 4 ausgebaut und danach das neue Fahrzeugfenster 2 lose in den Fensterausschnitt 3 eingelegt. Anschließend erfolgt das Aufbringen der Vorrichtung 1 auf dem Kraftfahrzeug 4. Hierzu wird zunächst der Basisrahmen 8 mit den Saugern 8a auf die Motorhaube 4a aufgesetzt. Weiter werden die Gabeln 9c aufweisenden Fußteile 9b mit den Saugern 9a auf das Dach 4b des Kraftfahrzeugs 4 aufgesetzt. Dann wird durch Schließen der Verbindungselemente 73 der Trägerrahmen 5 am Basisrahmen 8 fixiert. Nach Ausrichten des Trägerrahmens 5 in z-Richtung durch Verschieben des Rohrs 10 am Trägerrahmen 5 und anschließender Lagefixierung des Rohrs 10 am Basisrahmen 8 wird der Trägerrahmen 5 durch Einlegen des Rahmensegments 7b in den Gabeln 9c lagefixiert.

Die Motorhaube 4a kann generell und anders als in Figur 1 dargestellt über den unteren Rand des Fensterausschnitts 3 hervorstehen, d. h. diesen verdecken. Daran angepasst wird zum Aufsetzen der Sauger 12a des Montagerahmens 6 auf dem Fahrzeugfenster 2 im nächsten Arbeitsschritt eine daran angepasste Positionsverstellung des Montagerahmens 6 relativ zum Trägerrahmen 5 durchgeführt. Hierzu wird zunächst der Trägerrahmen 5 in x-Richtung auf die Motorhaube 4a durch Betätigen und anschließendes Fixieren der Hebel 15 zubewegt. Mit den Hebeln 15 erfolgt eine Höhenverstellung über das Führungselement 17 durch Betätigen und anschließendes Arretieren des Hebels 18. Bei dieser Höhenverstellung wird der Montagerahmen 6 so abgesenkt, dass dessen Sauger 12a auf dem Fahrzeugfenster 2 aufsitzen.

Dann erfolgt ein Überführen des Montagerahmens 6 aus dieser Montageposition in eine Arbeitsposition.

Hierzu wird der Montagerahmen 6 mit dem daran fixierten Fahrzeugfenster 2 zunächst wieder bis in die Ausgangshöhe angehoben. Danach wird der Montagerahmen 6 in negativer x-Richtung um denselben Betrag wie zuvor an dem Trägerrahmen 5 von der Motorhaube 4a weg geschoben.

Danach erfolgt ein Ablösen des Rahmensegments 7b von den Gabeln 9c der Fußteile 9b auf dem Dach 4b des Kraftfahrzeugs 4 und Schwenken des den Montagerahmen 6 tragenden Teils des Trägerrahmens 5 bezüglich des an der Motorhaube 4a fixierten Basisrahmens 8. In dieser Stellung befindet sich das Fahrzeugfenster 2 in einer Arbeitsposition, in welcher an dessen Rand Klebstoff aufgebracht wird. In der Arbeitsposition liegt der Bügel 20 auf der Motorhaube auf. Alternativ oder zusätzlich kann Klebstoff auf den Fensterausschnitt 3 aufgebracht werden. Da die Sauger 8a am Basisrahmen 8 eine Dreipunktauflage auf der Motorhaube 4a bilden, ist ein sicherer Halt der Sauger 8a auf der Motorhaube 4a insbesondere auch während des Schwenkvorgangs gewährleistet.

Danach wird der Trägerrahmen 5 mit dem Montagerahmen 6 zurück geschwenkt, so dass das Rahmensegment 7b wieder in den Gabeln 9c der Fußteile 9b auf dem Dach 4b des Kraftfahrzeugs 4 gelagert ist.

Danach erfolgt das Einsetzen des Fahrzeugfensters 2 in den Fensterausschnitt 3. Hierzu erfolgt zunächst wieder die Verschiebung des Montagerahmens 6 in x-Richtung auf die Motorhaube 4a zu, wobei der Betrag der Verschiebung derselbe ist, wie bei der Zustellbewegung des Montagerahmens 6 auf das lose im Fensterausschnitt 3 liegende Fahrzeugfenster 2.

Danach wird der Montagerahmen 6 abgesenkt und das Fahrzeugfenster 2 so in der gewünschten Position in den Fensterausschnitt 3 eingesetzt, womit der Montagevorgang beendet ist.

Da die Zustellbewegung des Montagerahmens 6 auf das lose im Fensterausschnitt 3 liegende Fahrzeugfenster 2 exakt dieselbe ist, wie die Zustellbewegung beim Einsetzen des Fahrzeugfensters 2 in den Fensterausschnitt 3 zur Fixierung des Fahrzeugfensters 2 kann dieser Einsetzvorgang auf Basis der bei der ersten Zustellbewegung eingelernten Werte exakt und reproduzierbar durchgeführt werden.

### Bezugszeichenliste

- (1): Vorrichtung
- (2): Fahrzeugfenster
- (3): Fensterausschnitt
- (4): Kraftfahrzeug
- (4a): Motorhaube
- (4b): Dach
- (5): Trägerrahmen
- (6): Montagerahmen
- (7): Trägerprofile
- (71): Querprofil
- (72): Querprofil
- (73): Verbindungselemente
- (7a): Gelenk
- (7b): Rahmensegment
- (8): Basisrahmen
- (8a): Sauger
- (8b): Fußteil
- (9a): Sauger
- (9b): Fußteil
- (9c): Gabel
- (10): Rohr
- (11): Rahmenprofil
- (12): Streben
- (12a): Sauger
- (13): Schienen
- (13a): Langlöcher
- (14): Stifte
- (15): Hebel
- (16): Rundstab
- (17): Führungselement
- (18): Hebel
- (19): Gelenkverbindung
- (20): Bügel

## Patentansprüche

1. Vorrichtung (1) zur Montage eines Fahrzeugfensters (2) in einem Fensterausschnitt (3) eines Kraftfahrzeugs (4), mit einem Trägerrahmen (5) und Saugern (8a, 9a), welche zur Fixierung des Trägerrahmens (5) am Kraftfahrzeug (4) auf Segmente der Karosserie beidseits der Fensterausschnitte (3) aufsetzbar sind, und mit einem am Trägerrahmen (5) positionsverstellbar angeordneten Montagerahmen (6) mit weiteren Saugern (12a) zur Fixierung des Fahrzeugfensters (2), wobei der den Montagerahmen (6) tragende Trägerrahmen (5) bezüglich eines die Sauger (8a) aufweisenden Teils, das an einem an einen Rand des Fensterausschnitts (3) anschließenden Segment der Karosserie fixierbar ist, schwenkbar ist.

2. Vorrichtung nach Anspruch 1, **dadurch gekennzeichnet, dass** das Teil in Form eines dreieckigen Basisrahmens (8) ausgebildet ist, an dessen Ecken die Sauger (8a) gelagert sind.

3. Vorrichtung nach Anspruch 2, **dadurch gekennzeichnet, dass** der Basisrahmen (8) lösbar mit dem Trägerrahmen (5) verbunden ist.

4. Vorrichtung nach Anspruch 2 oder 3, **dadurch gekennzeichnet, dass** der Trägerrahmen (5) bezüglich des Basisrahmens (8) verschiebbar ist.

5. Vorrichtung nach einem der Ansprüche 1 bis 4, **dadurch gekennzeichnet, dass** an einem zweiten Segment der Karosserie Sauger (9a) aufsetzbar sind, die an Fußteilen (9b) mit Gabeln (9c) angeordnet sind, in welche der Trägerrahmen (5) einlegbar ist.

6. Vorrichtung nach Anspruch 5, **dadurch gekennzeichnet, dass** der Trägerrahmen (5) ein schwenkbar gelagertes Rahmensegment (7b) aufweist, welches in die Gabeln (9c) einführbar ist.

7. Vorrichtung nach einem der Ansprüche 1 bis 6, **dadurch gekennzeichnet, dass** der Montagerahmen (6) am Trägerrahmen (5) in dessen Längsrichtung verstellbar und höhenverstellbar ist.

8. Vorrichtung (1) nach Anspruch 7, **dadurch gekennzeichnet, dass** der Montagerahmen (6) schwenkbar gelagert ist.

9. Verfahren zur Montage eines Fahrzeugfensters (2) in einem Fensterausschnitt (3) eines Kraftfahrzeugs (4) mittels einer Vorrichtung (1) nach einem der Ansprüche 1 bis 8, **gekennzeichnet durch** folgende Verfahrensschritte:
Fixieren eines Trägerrahmens (5) an der Karosserie des Kraftfahrzeugs (4) in einer Montageposition, in welcher der Trägerrahmen (5) mittels Saugern (8a, 9a), die auf beidseits des Fensterausschnitts liegende Segmente der Karosserie des Fahrzeugs (4) aufgesetzt werden, fixiert wird.
Fixieren des Fahrzeugfensters (2) an Saugern (12a) eines Montagerahmens (6) in vorgegebener Sollposition **durch** Positionsverstellung des Montagerahmens (6) relativ zum Trägerrahmen (5),
Durchführen einer Schwenkbewegung des den Montagerahmen (6) tragenden Trägerrahmens (5) bezüglich eines, an einem an einen Rand des Fensterausschnitts (3) angrenzenden Segment der Karosserie mit Saugern (8a) befestigten Teils zur Einbringung des Fahrzeugfensters (2) in eine vom Fensterausschnitt (3) entfernte Arbeitsposition,
Aufbringen von Klebstoff auf das Fahrzeugfenster (2) oder den Fensterausschnitt (3),
Durchführen einer Schwenkbewegung des Trägerrahmens (5) in die Montageposition,
Einsetzen des Fahrzeugfensters (2) in den Fensterausschnitt (3) **durch** Positionsverstellung des Montagerahmens (6) relativ zum Trägerrahmen (5).

10. Verfahren nach Anspruch 9, **dadurch gekennzeichnet, dass** zur Fixierung der Sauger (12a) des Montagerahmens (6) in der Sollposition der Trägerrahmen (5) in die Montageposition eingebracht ist und bei im Fensterausschnitt (3) lose aufgelegtem Fahrzeugfenster (2) eine Positionsverstellung des Montagerahmens (6) durchgeführt wird, so dass dessen Sauger (12a) in der Sollposition liegend an dem Fahrzeugfenster (2) fixiert werden.

11. Verfahren nach Anspruch 10, **dadurch gekennzeichnet, dass** bei an der Karosserie fixierten Trägerrahmen (5) durch Positionsverstellung des Montagerahmens (6) dessen Sauger (12a) an einem im Fensterausschnitt (3) liegenden auszuwechselnden Fahrzeugfenster (2) in den Sollpositionen fixiert werden und diese Sollpositionen markiert werden, dass dann der Montagerahmen (6) in die Arbeitsposition geschwenkt wird und das auszuwechselnde Fahrzeugfenster (2) vom Montagerahmen (6) abgenommen wird, und anhand der Markierungen das neue Fahrzeugfenster (2) in den Sollpositionen an den Saugern (12a) des Montagerahmens (6) fixiert wird.

12. Verfahren nach einem der Ansprüche 10 oder 11, **dadurch gekennzeichnet, dass** vor Durchführen der Schwenkbewegung in die Arbeitsposition eine inverse Positionsverstellung des Montagerahmens (6) zum Abheben des Fahrzeugfensters (2) vom Fensterausschnitt (3) durchgeführt wird.

13. Verfahren nach Anspruch 12, **dadurch gekennzeichnet, dass** nach Durchführen der Schwenkbewegung in die Montageposition eine Positionsverstellung des Montagerahmens (6) zum Absenken des Fahrzeugfensters (2) auf den Fensterausschnitt (3) durchgeführt wird.

14. Verfahren nach einem der Ansprüche 12 oder 13, **dadurch gekennzeichnet, dass** die Positionsverstellung des Montagerahmens (6) eine Hub- oder Senkbewegung in Richtung des Fensterausschnitts (3) sowie eine Verschiebebewegung des Montagerahmens (6) in Längsrichtung des Trägerrahmens (5) umfasst.

## Claims

1. Device (1) for installing a vehicle window (2) in a window aperture (3) of a motor vehicle (4), comprising a carrier frame (5) and suckers (8a, 9a), which for fixing of the carrier frame (5) to the motor vehicle (4) can be placed on segments of the bodywork on both sides of the window aperture (3), and a mounting frame (6), which is arranged at the carrier frame (5) to be adjustable in position, with further suckers (12a) for fixing the vehicle window (2), wherein the carrier frame (5) carrying the mounting frame (6) is pivotable with respect to a part which has the suckers (8a) and which is fixable to a segment of the bodywork connected with an edge of the window aperture (3).

2. Device according to claim 1, **characterised in that** the part is constructed in the form of a triangular base frame (8), at the corners of which the suckers (8a) are mounted.

3. Device according to claim 2, **characterised in that** the base frame (8) is detachably connected with the carrier frame (5).

4. Device according to claim 2 or 3, **characterised in that** the carrier frame (5) is displaceable with respect to the base frame (8).

5. Device according to any one of claims 1 to 4, **characterised in that** suckers (9a), which are arranged at foot parts (9b) with forks (9c) into which the carrier frame (5) is introducible, can be placed at a second segment of the bodywork.

6. Device according to claim 5, **characterised in that** the carrier frame (5) has a pivotably mounted frame segment (7b) introducible into the forks (9c).

7. Device according to any one of claims 1 to 6, **characterised in that** the mounting frame (6) is adjustable at the carrier frame (5) in the longitudinal direction thereof and adjustable in height.

8. Device (1) according to claim 7, **characterised in that** the mounting frame (6) is mounted to be pivotable.

9. Method for installing a vehicle window (2) in a window aperture (3) of a motor vehicle (4) by means of a device (1) according to any one of claims 1 to 8, **characterised by** the following method steps:
fixing a carrier frame (5) to the bodywork of the motor vehicle (4) in a mounting position in which the carrier frame (5) is fixed by means of suckers (8a, 9a), which are placed on segments of the bodywork of the vehicle (4) on either side of the window aperture,
fixing the vehicle window (2) to suckers (12a) of a mounting frame (6) in predetermined target position by positional adjustment of the mounting frame (6) relative to the carrier frame (5),
executing a pivot movement of the carrier frame (5), which carries the mounting frame (6), with respect to a part, which is fastened by suckers (8a) to a segment of the bodywork adjoining an edge of the window aperture (3), for bringing the vehicle window (2) into a working position spaced from the window aperture (3) ,
applying adhesive to the vehicle window (2) or to the window aperture (3),
executing a pivot movement of the carrier frame (5) into the mounting position and
inserting the vehicle window (2) into the window aperture (3) by positional adjustment of the mounting frame (6) relative to the carrier frame (5).

10. Method according to claim 9, **characterised in that** for fixing the suckers (12a) of the mounting frame (6) in the target position the carrier frame (5) is brought into the mounting position and, with the vehicle window (2) loosely placed in the window aperture (3), a positional adjustment of the mounting frame (6) is carried out so that the suckers (12a) thereof, lying in the target position, are fixed to the vehicle window (2).

11. Method according to claim 10, **characterised in that** with the carrier frame (5) fixed to the bodywork the suckers (12a) of the mounting frame (6) are fixed, by positional adjustment of the mounting frame, to a vehicle window (2), which exchangeably lies in the window aperture (3), in the target positions and these target positions are marked, that then the mounting frame (6) is pivoted into the working position and the exchangeable vehicle window (2) is removed from the mounting frame (6) and the new vehicle window (2) is fixed in the target positions to the suckers (12a) of the mounting frame (6) by way of the markings.

12. Method according to one of claims 10 and 11, **characterised in that** prior to execution of the pivot movement into the working position an inverse positional adjustment of the mounting frame (6) for lifting the vehicle window (2) from the window aperture (3) is performed.

13. Method according to claim 12, **characterised in that** after execution of the pivot movement into the mounting position a positional adjustment of the mounting frame (6) for lowering of the vehicle window (2) onto the window aperture (3) is carried out.

14. Method according to one of claims 12 and 13, **characterised in that** the positional adjustment of the mounting frame (6) comprises a raising a lowering movement in the direction of the window aperture (3) as well as a displacing movement of the mounting frame (6) in the longitudinal direction of the carrier frame (5).

## Revendications

1. Dispositif (1) de montage d'une fenêtre (2) dans une découpe (3) pratiquée dans un véhicule automobile (4), comprenant un cadre de support (5) et des ventouses (8a, 9a) qui, en vue de bloquer ou fixer ledit cadre de support (5) sur ledit véhicule automobile (4), peuvent être appliquées sur des segments de la carrosserie, de part et d'autre des découpes (3) recevant des fenêtres ; et un cadre de montage (6) placé sur ledit cadre de support (5) avec positions réglables, et muni de ventouses supplémentaires (12a) en vue du blocage de la fenêtre (2) du véhicule, sachant que ledit cadre de support (5), portant ledit cadre de montage (6), peut pivoter vis-à-vis d'une partie ou pièce dotée des ventouses (8a) et pouvant être consignée à demeure sur un segment de la carrosserie directement attenant à un bord de la découpe (3) recevant la fenêtre.

2. Dispositif selon la revendication 1, **caractérisé par le fait que** la partie ou pièce précitée est réalisée sous la forme d'un cadre triangulaire de base (8), dans les coins duquel les ventouses (8a) sont montées.

3. Dispositif selon la revendication 2, **caractérisé par le fait que** le cadre de base (8) est relié amoviblement au cadre de support (5).

4. Dispositif selon la revendication 2 ou 3, **caractérisé par le fait que** le cadre de support (5) peut coulisser par rapport au cadre de base (8).

5. Dispositif selon l'une des revendications 1 à 4, **caractérisé par le fait que** des ventouses (9a), pouvant être mises en place sur un second segment de la carrosserie, se trouvent sur des jambages (9b) pourvus de fourches (9c) dans lesquelles le cadre de support (5) peut être inséré.

6. Dispositif selon la revendication 5, **caractérisé par le fait que** le cadre de support (5) présente un segment d'encadrement (7b) monté pivotant et pouvant être introduit dans les fourches (9c).

7. Dispositif selon l'une des revendications 1 à 6, **caractérisé par le fait que** le cadre de montage (6) peut être ajusté et réglé, sur le cadre de support (5), dans la direction longitudinale de ce dernier et ajusté et réglé en hauteur.

8. Dispositif (1) selon la revendication 7, **caractérisé par le fait que** le cadre de montage (6) est monté à pivotement.

9. Procédé de montage d'une fenêtre (2) dans une découpe (3) pratiquée dans un véhicule automobile (4), au moyen d'un dispositif (1) selon l'une des revendications 1 à 8, **caractérisé par** les étapes opératoires suivantes :
blocage à demeure d'un cadre de support (5) sur la carrosserie dudit véhicule automobile (4), dans une position de montage dans laquelle ledit cadre de support (5) est verrouillé au moyen de ventouses (8a, 9a) mises en place sur des segments de la carrosserie dudit véhicule (4) situés de part et d'autre de la découpe recevant la fenêtre,
blocage à demeure de la fenêtre (2) du véhicule sur des ventouses (12a) d'un cadre de montage (6), dans une position de consigne préétablie, par réglage de la position dudit cadre de montage (6) vis-à-vis du cadre de support (5),
exécution d'un mouvement pivotant du cadre de support (5), portant le cadre de montage (6), vis-à-vis d'une partie fixée, par des ventouses (8a), sur un segment de la carrosserie directement attenant à un bord de la découpe (3) recevant la fenêtre, en vue d'amener ladite fenêtre (2) du véhicule à une position de travail éloignée de ladite découpe (3),
dépôt d'adhésif sur la fenêtre (2) du véhicule, ou sur la découpe (3) recevant ladite fenêtre,
exécution d'un mouvement pivotant du cadre de support (5) jusqu'à la position de montage,
insertion de la fenêtre (2) du véhicule dans la découpe (3) recevant ladite fenêtre, par réglage de la position du cadre de montage (6) par rapport au cadre de support (5).

10. Procédé selon la revendication 9, **caractérisé par le fait que**, en vue de la consignation à demeure des ventouses (12a) du cadre de montage (6) dans la position de consigne, le cadre de support (5) est amené à la position de montage et un réglage de la position dudit cadre de montage (6) est effectué lorsque la fenêtre (2) du véhicule est posée avec jeu dans la découpe (3) recevant ladite fenêtre, de telle sorte que les ventouses (12a) dudit cadre, occupant ladite position de consigne, soient verrouillées sur ladite fenêtre (2) du véhicule.

11. Procédé selon la revendication 10, **caractérisé par le fait que**, lorsque le cadre de support (5) est consigné à demeure sur la carrosserie, les ventouses (12a) du cadre de montage (6) sont verrouillées dans les positions de consigne par réglage de la position dudit cadre de montage, sur une fenêtre (2) de véhicule logée dans la découpe (3) et devant être remplacée, puis lesdites positions de consigne sont repérées ; et **par le fait que** le cadre de montage (6) est ensuite animé d'un pivotement jusqu'à la position de travail et la fenêtre (2), devant être remplacée, est enlevée dudit cadre de montage (6), puis la nouvelle fenêtre (2) de véhicule est verrouillée dans les positions de consigne, à l'appui des repères, sur les ventouses (12a) dudit cadre de montage (6).

12. Procédé selon l'une des revendications 10 ou 11, **caractérisé par le fait que**, préalablement à l'exécution du mouvement pivotant jusqu'à la position de travail, il est procédé à un réglage inversé de la position du cadre de montage (6), en vue de soulever la fenêtre (2) du véhicule à l'écart de la découpe (3) recevant ladite fenêtre.

13. Procédé selon la revendication 12, **caractérisé par le fait que**, après l'exécution du mouvement pivotant jusqu'à la position de montage, il est procédé à un réglage de la position du cadre de montage (6), en vue d'abaisser la fenêtre (2) du véhicule sur la découpe (3) recevant ladite fenêtre.

14. Procédé selon l'une des revendications 12 ou 13, **caractérisé par le fait que** le réglage de la position du cadre de montage (6) englobe un mouvement de levage ou un mouvement d'abaissement dans la direction de la découpe (3) recevant la fenêtre, ainsi qu'un mouvement coulissant dudit cadre de montage (6) dans la direction longitudinale du cadre de support (5).
